# DEMANDE DE BREVET EUROPEEN

(11) **EP 3 789 090 A1**
(43) Date de publication de la demande: **10.03.2021**
(21) Numéro de dépôt: 20193563.2
(22) Date de dépôt: 31.08.2020
(51) Int. Cl.: A63F 13/358, A63F 13/44

(54) **PROCÉDÉ DE CAPTURE ET DE DIFFUSION POUR COORDONNER DES COMMANDES PRODUITES PAR DEUX CLIENTS DISTANTS ASSOCIÉS À UNE MÊME SESSION INFORMATIQUE**

(30) Priorité: 05.09.2019 FR 1909788
(71) Demandeur: Blade, 75002 Paris (FR)
(72) Inventeur: GELLY, Grégory, 75013 PARIS (FR); DIRSON, Yann, 92000 NANTERRE (FR)
(74) Mandataire: IP Trust

(57) **Abrégé**

Procédé de capture et de diffusion pour coordonner des commandes produites par des dispositifs d'entrée-sortie d'un premier et d'un deuxième client distant (4, 4') associés à une même session informatique s'exécutant sur un ordinateur hôte (1), le procédé de capture et de diffusion mettant en œuvre depuis l'ordinateur hôte (1) les opérations suivantes : adresser à chaque client distant (4, 4') une même séquence de repères temporels identifiables ; recevoir et stocker temporairement les commandes provenant des premier et deuxième clients distants (4, 4') pendant une durée de stockage, chaque commande étant associée à une donnée de coordination rattachant un instant de production de la commande à un repère temporel ; ordonner les commandes reçues pendant la durée de stockage selon leur donnée de coordination associée ; fournir successivement les commandes ordonnées à la session informatique.

## Description

### DOMAINE DE L'INVENTION

La présente invention porte sur un procédé de capture et de diffusion pour traiter des commandes produites par des dispositifs d'entrée-sortie d'au moins deux clients distants associés à une même session informatique s'exécutant sur un ordinateur hôte. La présente invention porte également sur un procédé d'exploitation pour traiter ces commandes.

L'invention trouve une application particulière dans le domaine du jeu vidéo en réseau, lorsque plusieurs participants (utilisateurs des clients distants) reçoivent les mêmes informations de session et souhaitent interagir simultanément avec la session, et plus particulièrement avec l'application de jeu qui s'y exécute.

### ARRIERE PLAN TECHNOLOGIQUE DE L'INVENTION

Le document US2017228851 décrit une configuration d'un système informatique de type infonuagique (ou « cloud computing » selon l'expression anglo-saxonne consacrée) dans lequel les dispositifs d'interface (écran, clavier, manette, ...) sont distants de la partie traitement et stockage de la session informatique.

Les dispositifs d'interface se trouvent à proximité même de l'utilisateur et forment un client distant. Les composants de traitement et de stockage constituant l'ordinateur hôte se trouvent dans un lieu d'hébergement distinct et généralement éloigné du client distant.

La session informatique d'utilisateur s'exécute sur l'ordinateur hôte et l'ordinateur hôte et le client distant s'échangent respectivement des informations de session et des données de commande par l'intermédiaire d'un réseau informatique, par exemple le réseau Internet auquel ils sont l'un et l'autre reliés. Ces informations de session peuvent ainsi comprendre des images et du son destiné à être reproduit du côté du client distant, ainsi que des informations de commande, telles que des instructions commandées depuis l'ordinateur hôte, destinées à être communiquées au client distant, qui partage en retour des données produites par les dispositifs d'entrée-sortie telles que des données d'affichage, de son et de commande. On émule de la sorte, pour l'utilisateur, la présence d'un ordinateur physique performant sans qu'il ait besoin de détenir directement ou de disposer d'un tel équipement.

Certaines applications informatiques nécessitent ou peuvent tirer profit de la faculté, pour un utilisateur, de partager sa session informatique avec au moins un autre participant. Il peut s'agir par exemple de partager les images produites par la session informatique et s'affichant sur l'écran du client distant avec cet autre participant. Il peut s'agir également de partager ou donner le contrôle de la session à cet autre participant, avec laquelle il peut interagir par exemple par l'intermédiaire de son clavier et de sa souris.

C'est le cas notamment dans les jeux en ligne où un groupe de joueurs peut souhaiter partager entre eux leurs écrans respectifs afin de disposer d'une vision plus globale de l'environnement dans lequel ils évoluent. Cela peut être également le cas dans le domaine de l'enseignement à distance où un enseignant peut souhaiter avec accès aux images s'affichant sur l'écran de son élève et éventuellement prendre le contrôle de la session pour, par exemple, le guider ou le corriger.

Quelle que soit l'application justifiant le besoin de partager les informations d'une session informatique, plusieurs clients distants peuvent être susceptibles d'interagir en même temps avec la même session informatique, en envoyant des commandes à l'ordinateur hôte. Dans cette situation, l'ordinateur hôte reçoit les commandes adressées par chaque client distant (mouvement de curseurs, clic de souris, ...) et les décode et les injecte dans la session selon leur ordre d'arrivée pour qu'elles y soient traitées par l'application ou les applications hébergée(s) dans cette session.

Chaque client distant souffre d'une latence, c'est-à-dire un délai de communication avec l'ordinateur hôte, qui dépend de nombreux facteurs, notamment la qualité de son réseau Internet, et qui diffère donc généralement de celle d'un autre client distant. En conséquence, les informations de session adressées par l'ordinateur hôte aux clients d'une même session informatique ne sont pas reçues au même instant par ces clients, dans un repère temporel absolu.

Cette différence de latence peut conduire à des situations dans lesquelles un client distant ayant réagi plus rapidement qu'un autre client à l'apparition d'une information de session (par exemple l'affichage d'une nouvelle image d'écran) voit sa commande être reçue par l'ordinateur hôte, et donc traitée par la session, postérieurement à celle de l'autre client.

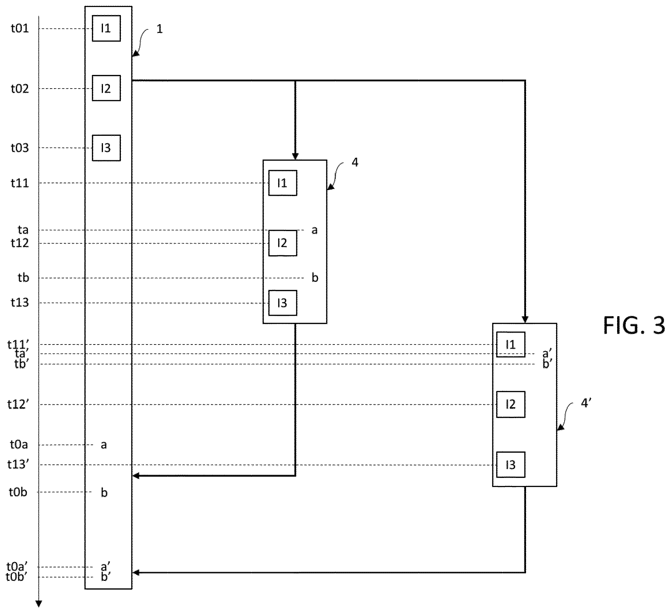

A titre d'exemple, on a représenté sur la figure 3 un chronogramme des échanges d'informations classiquement opérés entre un ordinateur hôte et un premier et un deuxième client distant.

Sur cette figure, trois informations de session, par exemple trois images d'écran successives I1, I2 et I3 sont produites par la session informatique. Ces trois informations de session sont respectivement émises aux temps t01, t02, t03 par l'ordinateur hôte 1, à destination des clients distants 4 et 4'. Le premier client 4 reçoit les informations I1, I2, I3 respectivement aux temps t11, t12, t13. Le deuxième client 4', dont la latence est plus importante que le premier client 4, reçoit ces informations I1, I2, I3 respectivement aux temps t11', t12', t13', avec t11' > t11, t12' > t12 et t13' > t13. Ici, le deuxième client distant 4' souffrant d'une très forte latence, il reçoit la première information I1 après que le premier client 4 ait reçu la troisième information I3.

L'utilisateur du client distant 4, à la réception de la première information I1, effectue deux instructions au moyen des dispositifs d'entrée/sortie du premier client 4, par exemple deux clics de souris successifs, désignés a et b sur la figure 3, respectivement effectuées aux temps ta et tb. De la même façon, l'utilisateur du deuxième client 4', à la réception de la première information I1, effectue deux instructions au moyen des dispositifs d'entrée/sortie du deuxième client 4' désignés a' et b', respectivement effectuées aux temps ta' et tb'.

Dans cette illustration, le premier client distant 4 effectue la première instruction a entre la réception des informations I1 et I2, et la deuxième instruction entre la réception des informations I2 et I3. Le deuxième client distant 4', plus réactif, effectue les deux instructions entre la réception des informations I1 et I2. Plus particulièrement, il effectue les deux instructions a', b', plus rapidement que la première instruction a du premier client 4 après la réception de la première information I1.

Chacune des instructions, constituant des données de commande, est fournie par chaque client distant 4, 4' à l'ordinateur hôte 1, qui reçoit ces données et les fournit à la session informatique. Les instants de réception des instructions a, b, a', b' par l'ordinateur hôte 1 sont respectivement notés t0a, t0b, t0a', t0b'.

L'ordinateur hôte fournit les données de commande à la session dans leur ordre d'arrivée et la session informatique traite donc les commandes dans l'ordre a, b, a', b'. Cet ordre ne reflète pas le temps de réaction réel de chaque client 4, 4' suivant la réception d'une information de session. En particulier, cet ordre répercute les phénomènes de latence pouvant affecter chaque client.

On comprend donc que la variabilité de la latence peut engendrer une distorsion de traitement, lors de la réception par l'ordinateur hôte, des commandes fournies par les différents clients. Cette distorsion de traitement est susceptible de perturber la bonne utilisation d'une même session informatique par une pluralité de clients distants.

Le document US20110053686 porte sur un procédé de synchronisation des séquences de jeu entre plusieurs dispositifs de jeu en réseau. Dans l'architecture informatique de ce document, chaque dispositif de jeu exécute sa propre session informatique Le document vise à alléger le stockage des dispositifs de jeu afin de ne pas stocker ni traiter par erreur des données reçues des autres dispositifs appartenant à des séquences de jeu terminées, et à synchroniser la transition d'une séquence de jeu à la suivante pour tous les dispositifs de jeu.

### OBJET DE L'INVENTION

Un but de l'invention est de remédier au moins en partie au problème précité. Elle vise plus particulièrement un procédé de capture et de diffusion et un procédé d'exploitation pour coordonner et traiter des commandes fournies par les clients distants, qui permettent de coordonner ces commandes malgré la variabilité de la latence pouvant affecter les clients.

### BREVE DESCRIPTION DE L'INVENTION

En vue de la réalisation de ce but, l'objet de l'invention propose un procédé de capture et de diffusion pour traiter des commandes produites par des dispositifs d'entrée-sortie d'un premier et d'un deuxième client distant associés à une même session informatique s'exécutant sur un ordinateur hôte, le procédé de capture et de diffusion mettant en œuvre depuis l'ordinateur hôte les opérations suivantes :
- adresser à chaque client distant une même séquence de repères temporels identifiables ;
- recevoir et stocker temporairement les commandes provenant des premier et deuxième clients distants pendant une durée de stockage, chaque commande étant associée à une donnée de coordination rattachant un instant de production de la commande à un repère temporel ;
- ordonner les commandes reçues pendant la durée de stockage selon leur donnée de coordination associée ;
- fournir successivement les commandes ordonnées à la session informatique.

Selon d'autres caractéristiques avantageuses et non limitatives de l'invention, prises seules ou selon toute combinaison techniquement réalisable :
- chaque repère temporel est associé à une information de session simultanément adressée par l'ordinateur hôte aux clients distants ;
- les informations de session comprennent des informations d'affichage, de son et/ou de commande ;
- les informations d'affichage sont des images de la session informatique, chaque repère temporel comprenant un numéro d'image ;
- la durée de stockage est comprise entre 1 ms et 1 s ;

L'objet de l'invention propose également un programme d'ordinateur contenant des instructions aptes à la mise en œuvre des opérations du procédé de capture et de diffusion lorsque le procédé est exécuté dans l'ordinateur hôte.

L'objet de l'invention propose également un procédé d'exploitation pour traiter une commande produite par un dispositif d'entrée-sortie d'un client distant associé à une session informatique s'exécutant sur un ordinateur hôte, le procédé d'exploitation mettant en œuvre les opérations suivantes :
- recevoir une séquence de repères temporels identifiables fournies par l'ordinateur hôte ;
- élaborer une donnée de coordination rattachant un instant de production de la commande à un des repères temporels ;
- fournir la commande associée à la donnée de coordination à l'ordinateur hôte.

Selon d'autres caractéristiques avantageuses et non limitatives de l'invention, prises seules ou selon toute combinaison techniquement réalisable :
- la donnée de coordination comprend un identifiant du repère temporel associé à la donnée de coordination ;
- la donnée de coordination comprend une mesure du temps séparant l'instant de production de la commande à la réception du repère temporel rattaché ;

L'objet de l'invention propose également un programme d'ordinateur contenant des instructions aptes à la mise en œuvre des opérations du procédé d'exploitation lorsque le procédé est exécuté dans le client distant.

### BREVE DESCRIPTION DES FIGURES

D'autres caractéristiques et avantages de l'invention ressortiront de la description détaillée de l'invention qui va suivre en référence aux figures annexées sur lesquels :
- La figure 1 représente une architecture informatique permettant de mettre en œuvre des procédés de capture et de diffusion et d'exploitation conformes à l'invention ;
- La figure 2 représente les opérations successives d'un procédé de capture et de diffusion et d'un procédé d'exploitation conformes à l'invention.
- La figure 3 représente un chronogramme des échanges d'informations entre un ordinateur hôte et un premier et un deuxième client distant de l'état de la technique.
- La figure 4 représente un chronogramme des échanges d'informations entre un ordinateur hôte et un premier et un deuxième client distant mettant en œuvre un procédé de capture et de diffusion et un procédé d'exploitation conformes à l'invention.

### DESCRIPTION DETAILLEE DE L'INVENTION

### Architecture informatique

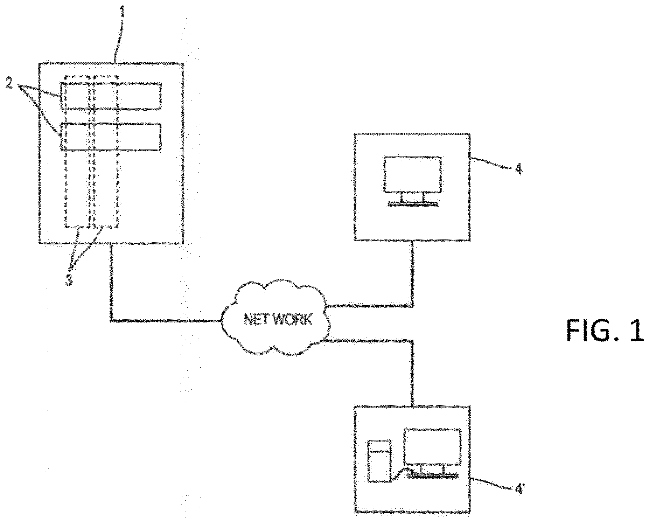

La figure 1 représente une architecture informatique mettant en œuvre le procédé de capture et de diffusion et le procédé d'exploitation conformes à l'invention.

Cette architecture est formée ici d'un ordinateur hôte 1 qui présente une pluralité de serveurs 2. Les serveurs 2 sont constitués de composants performants (CPU, mémoire, disque de stockage, cartes graphiques et de réseau, ...) de manière à former une plateforme matérielle particulièrement efficace pour exécuter des applications pouvant nécessiter des capacités de traitement importantes, telles que les jeux vidéo.

Comme cela est bien connu, les serveurs 2 peuvent être configurés pour héberger une ou plusieurs machine(s) virtuelle(s) 3, en même temps que son/leur système d'exploitation et ses/leurs applications. La virtualisation permet d'héberger une pluralité de machines virtuelles 3 dans chaque serveur 2 pour fournir une pluralité d'environnements virtuels totalement isolés les uns des autres. Chaque environnement virtuel a accès aux ressources matérielles du serveur (CPU, mémoire, moyens de stockage, carte graphique, ...) permettant d'y exécuter une session informatique d'utilisateur. On peut citer, parmi les technologies de virtualisation bien connues, Citrix® XenServer™, Microsoft® Hyper-V™, VMware® ESXi™, Oracle™ Virtual box™, Quick Emulator™ sous licence ouverte GNU™ (QEMU™), etc.

Chacune des machines virtuelles 3 dans l'ordinateur hôte 1 peut être dédiée à un utilisateur spécifique. Les utilisateurs interagissent avec leurs machines virtuelles dédiées 3 depuis des clients distants 4, 4', chacun étant connecté à l'ordinateur hôte 1 par l'intermédiaire d'un réseau comme Internet. Étant donné que la plus grande partie, si ce n'est l'intégralité, du traitement se fait au niveau de l'ordinateur hôte 1, les clients distants 4, 4' peuvent rester très simples, et peuvent inclure, par exemple, un simple terminal, un connecteur de réseau et des dispositifs d'entrée/sortie de base (clavier, souris, ...) comme représenté à titre d'exemple par le premier client distant 4 sur la figure 1. Selon une autre solution, il peut s'agir d'un ordinateur personnel standard, avec sa propre unité centrale, sa carte graphique, ses périphériques ou d'une tablette ou d'un Smartphone, comme représenté par l'autre client distant 4'. Tous les dispositifs informatiques 4, 4' en communication avec l'ordinateur hôte 1 ne sont pas nécessairement associés à une machine virtuelle (et ne forment donc pas un client distant, au sens de la présente description). Certains peuvent être équipés de toutes les ressources matérielles et logicielles nécessaires, de telle manière que tous les traitements de session soient exécutés localement. Il ne bénéficie donc pas des ressources de traitement fournies par les serveurs 2 de l'ordinateur hôte 1. Ils peuvent néanmoins interagir, c'est-à-dire échanger des informations, avec les sessions d'utilisateur s'exécutant sur les serveurs 2.

Chaque serveur 2 héberge, de préférence, moins de dix machines virtuelles 3 pour fournir des ressources informatiques suffisantes, notamment matérielles, à chaque machine virtuelle 3 pour exécuter des applications hautes performances avec un niveau suffisant de service. Chaque machine virtuelle 3 est créée au moment de la connexion du client 4, 4' à l'ordinateur hôte 1 et comprend une unité centrale virtuelle, une mémoire principale virtuelle, ainsi que toutes les autres ressources nécessaires.

La machine virtuelle 3 comporte ou a accès à une unité de traitement graphique pour préparer des données d'affichage de la session. Cette unité de traitement graphique peut comprendre une simple carte vidéo matérielle associée à la machine virtuelle 3. Il peut s'agir également d'une carte vidéo virtuelle ou d'une carte graphique virtuelle entièrement émulée par les ressources matérielles du serveur (et notamment par son et ses unité(s) de traitement et/ou sa ou ses carte(s) graphique(s)), ces ressources étant mises à disposition de la machine virtuelle 3 par la couche logicielle de virtualisation (l'hyperviseur) s'exécutant sur le serveur 2. Cette unité de traitement graphique peut également mixer des éléments matériels et des éléments virtuels.

Préférentiellement, et selon un mode de mise en œuvre particulier assurant un haut niveau de performance, l'unité de traitement graphique correspond à une carte graphique physique performante, associée et entièrement dédiée à une machine virtuelle.

Quelle qu'en soit la nature, matérielle ou virtuelle, l'unité de traitement graphique associée à la machine virtuelle 3 a pour fonction de préparer et fournir les données d'affichage de la session informatique s'exécutant dans la machine virtuelle 3.

Cette unité de traitement comprend en outre au moins un encodeur vidéo apte à former un flux vidéo. Pour rappel, un encodeur vidéo a pour fonction de traiter des informations d'affichage, fournies en entrée, pour préparer un flux vidéo compressé et le fournir en sortie. A titre d'exemple, il peut s'agir d'un encodeur mettant en œuvre le standard H.264 ou H.265, qui est chargé, comme cela est bien connu en soi, d'encoder les images en données d'affichage, regrouper les données en tranches de données, structurer les tranches en segments de tranches et encapsuler les segments de tranche dans des unités de transport séparées (connues sous la dénomination anglo-saxonne « NAL Unit »), qui permettent d'adapter la taille de ces unités de transport en fonction du mécanisme de transport choisi. Un tel encodeur est généralement configuré pour que le flux vidéo qu'il prépare présente un débit binaire qui ne soit pas supérieur à un débit binaire plafond, qui peut être choisi. Pour limiter le débit binaire du flux vidéo au débit binaire plafond, l'encodeur peut être amené à dégrader la qualité des images formant le flux vidéo compressé. Bien entendu, plus le débit binaire plafond est réduit, plus la qualité perçue est réduite. Comme cela est bien connu en soi, la compression est obtenue en ne transmettant que les différences entre les données de deux images successives (voire même une partie de ces différences uniquement) . On prévoit d'insérer régulièrement dans le flux vidéo des images complètes (désigné par l'expression « image de référence »), afin de permettre d'initier le décodage du flux vidéo compressé et d'éviter toute dérive de ce décodage dans le temps. L'encodeur peut être configuré pour insérer, sur demande, une telle image de référence, et d'une manière plus générale être configuré pour ajuster le compromis entre le temps nécessaire d'encodage et la qualité du flux vidéo fourni.

L'unité de traitement graphique peut comprendre une pluralité d'encodeurs, c'est-à-dire au moins une unité d'encodage pouvant être exploitée pour fournir au moins deux flux vidéo indépendants l'un de l'autre. Il peut alors s'agir d'un unique encodeur matériel d'une carte graphique, dont on peut changer le contexte d'exécution, afin de former de manière concurrente au moins deux flux vidéo distincts l'un de l'autre. Il peut bien entendu s'agir d'une pluralité d'encodeurs matériels physiquement distincts les uns des autres et respectivement exploités pour former une pluralité de flux. Alternativement encore, ces encodeurs peuvent être réalisés de manière purement logicielle. Quelle que soit la solution retenue, il est avantageusement possible de former une pluralité de flux vidéo en contrôlant individuellement les caractéristiques de chacun de ces flux, et notamment leurs débits binaires.

De manière générale, chaque machine virtuelle 3 émule un ordinateur personnel virtuel hautes performances qui est associé et commandé par au moins un client distant 4, 4'. Chaque machine virtuelle 3 constitue donc, ou est l'équivalent, d'une session d'utilisateur, et un grand nombre de ces sessions d'utilisateur peuvent être exécutées sur les serveurs 2 de l'ordinateur hôte 1. L'architecture informatique peut comprendre une pluralité d'ordinateurs hôtes 1, reliés entre eux et qui peuvent se trouver dans des centres de données informatiques géographiquement séparés.

Pour afficher les images de la session d'utilisateur sur le terminal d'un client distant 4, 4' qui lui est associé, l'ordinateur hôte 1 approvisionne le client distant 4, 4' en informations d'affichage, en informations de son et en informations de commande pour les dispositifs d'entrée/sortie installés sur le site distant.

A l'inverse, les clients distants 4, 4' approvisionnent l'ordinateur hôte 1 en données de commande provenant du traitement des commandes générées par les dispositifs d'entrée/sortie qui se trouvent sur le site distant (clavier, souris), et éventuellement d'autres formes de données telles que des données d'affichage et sonores fournies par un dispositif USB ou intégrées dans une caméra ou un microphone du client distant 4, 4', ou des périphériques de réseau, au niveau du client distant, tels des imprimantes, ...

On désignera dans la présente description par « informations de session » toutes les informations adressées par l'ordinateur hôte 1 aux clients distants 4, 4'. Les informations de session comprennent notamment des informations d'affichage, de son ou de commande.

Du côté de l'ordinateur hôte 1, un programme de capture et de diffusion des informations de session s'exécute, en tâche de fond, dans chaque session informatique. Le programme de capture et de diffusion met en œuvre des opérations visant à collecter les informations d'affichage, de son et de commande préparées par la session informatique, d'encoder ces données pour limiter l'utilisation de la bande passante du réseau et de les transmettre au client distant 4, 4'. Le programme de capture et de diffusion reçoit et décode également les commandes communiquées par le client distant 4, 4', les exploite ou les fournit à la session d'utilisateur pour qu'elles soient traitées et exploitées de manière conventionnelle.

Les clients distants 4, 4', de leurs côtés, sont munis des ressources matérielles et/ou logicielles appropriées pour décoder les informations communiquées par le programme de capture et de diffusion afin qu'elles soient exploitées du côté client. Ces ressources permettent également de préparer les commandes générées par le client distant et de les transmettre à l'ordinateur hôte 1. Outre les données issues des dispositifs d'interface du client distant (clavier, souris, ...), les commandes peuvent comprendre des informations additionnelles, telles que l'information de débit de données reçu de l'ordinateur hôte, permettant de caractériser la qualité de la liaison informatique avec cet ordinateur. La réception et le traitement des informations de session, ainsi que le traitement et la fourniture des commandes, sont mises en œuvre par un programme d'exploitation s'exécutant au niveau du client distant 4, 4'.

Plusieurs clients distants, par exemple un premier client 4 et un deuxième client 4', peuvent être associés à une même session. Dans ce cas, le programme de capture et de diffusion peut envoyer simultanément aux deux clients 4, 4' les informations de session, au moyen par exemple de la pluralité d'encodeurs décrite précédemment. Dans l'autre sens, chaque client distant 4, 4' fournit les données de commande produites par ses dispositifs d'entrée/sortie au programme de capture et de diffusion, qui les traite pour les fournir à la session informatique.

### Procédés de capture et de diffusion et d'exploitation

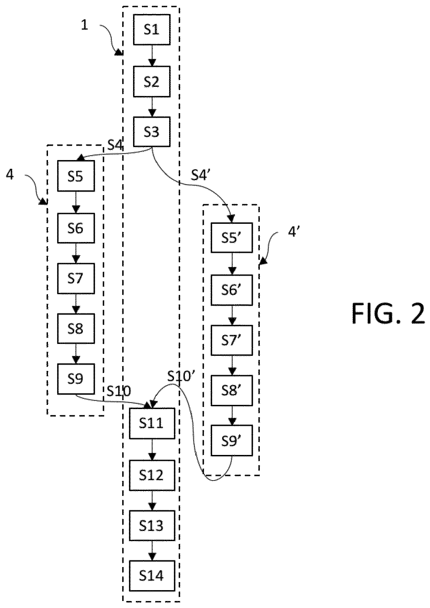

La figure 2 représente les opérations successives d'un procédé de capture et de diffusion et d'un procédé d'exploitation conformes à l'invention.

Dans cet exemple, un premier et un deuxième client distant 4, 4' sont associés à une même session informatique s'exécutant sur l'ordinateur hôte 1. Les procédés de capture et de diffusion et d'exploitation sont respectivement mis en œuvre par le programme de capture et de diffusion s'exécutant sur l'ordinateur hôte 1 et par le programme d'exploitation s'exécutant sur chaque client distant 4, 4'.

Le procédé de capture et de diffusion comprend une étape S1 de traitement des informations de session produites par la session informatique. Comme cela a été exposé précédemment, les informations de session, notamment les données d'affichage correspondant aux images d'écran de la session informatique et les données de son, peuvent être préparées et fournies par une unité de traitement graphique associée à la machine virtuelle 3 dans laquelle s'exécute la session. Les données d'affichage et de son sont fournies à au moins un encodeur, qui peut les préparer sous la forme d'un flux vidéo, par exemple au format H.264, et d'un flux audio tel que cela a été décrit plus en détail précédemment.

Le procédé de capture et de diffusion comprend également une étape S3 de préparation d'un flux de session. Par préparation d'un flux de session, on entend dans la présente description la mise en forme des informations de session préalablement encodées, pour permettre leur transmission à travers le réseau. En particulier, cette préparation peut comprendre l'encapsulation des unités NAL en paquets de couche réseau permettant le routage des informations à travers le réseau.

Un procédé conforme à l'invention comprend une étape S2 de préparation de repères temporels identifiables. Par identifiable, on entend que chaque repère temporel est associé à un identifiant permettant de le distinguer des autres repères temporels.

Les repères temporels peuvent être associés aux informations de session. L'étape de préparation des repères temporels peut être réalisée à la suite d'une des étapes précédentes, c'est-à-dire qu'un repère temporel est associé à chaque paquet d'informations, ou avant la réalisation de ces étapes, c'est-à-dire qu'un repère temporel est associé à une information de session, puis l'ensemble est encapsulé en paquets d'informations puis paquets de couche réseau. L'association des informations de session avec des repères temporels peut ainsi être effectuée au moment de la compression des informations par l'encodeur, au niveau des unités NAL, ou au cours de leur préparation sous forme de flux de session.

Avantageusement, dans le cas où les informations de session sont des images d'écran de la session informatique, il est possible d'associer un repère temporel à chaque image, chaque repère temporel pouvant alors comprendre un numéro d'image pour permettre son identification. Dans ce cas, à l'issue de l'étape S3 de préparation du flux de session, chaque paquet constituant le flux de session comporte dans son en-tête un numéro de paquet permettant d'ordonner les paquets correspondant à une même image, et un numéro d'image, tous les paquets correspondant à la même image comportant le même numéro d'image.

Les repères temporels peuvent être préparés dans un flux distinct du flux comprenant les autres informations de session, par exemple pour pouvoir circuler dans un canal différent des informations de session. Dans ce cas, les repères temporels peuvent être constitués d'une valeur de compteur, envoyées en séquence aux clients distants 4, 4', par exemple toute les 50 ms. Il n'est pas nécessaire que le temps séparant l'envoi de deux repères temporels successif soit constant. Le compteur peut être remis à zéro régulièrement, par exemple lorsqu'il atteint une valeur maximale de 256 (correspondant à une séquence totale de 13 secondes environ). Cette valeur maximale doit être suffisamment importante pour que la durée d'une séquence totale (avant la remise à zéro du compteur) soit plusieurs ordres de grandeurs plus important que le temps de latence moyens entre l'ordinateur hôte et les clients distants. Le flux distinct qui transporte ces repères temporels est formé de paquets encapsulant la valeur de compteur.

Quelle que soit la manière dont des repères temporels sont intégrés dans le flux de session pour être adressés en séquence aux clients distant, ceux-ci sont envoyés de manière simultanée à la pluralité de clients distants 4, 4' associés à la même session informatique. Pour ce faire, il est possible de préparer autant de flux de session que de clients distants, par exemple au moyen d'une pluralité d'encodeurs. Alternativement, il est également possible d'employer une méthode de multidiffusion (ou « multicast » selon la terminologie anglo-saxonne généralement utilisée), qui consiste à préparer et émettre un unique flux de session depuis l'ordinateur hôte 1, puis à dupliquer ce flux, au niveau du réseau, pour router le flux vers l'ensemble des clients distants 4, 4' associés à la session informatique.

Quelle que soit la méthode employée, le programme de capture et de diffusion adresse le flux de session à l'ensemble des clients distants 4, 4' dans des étapes S4, S4'. En particulier, le programme de capture et de diffusion adresse à chaque client distant 4, 4' une même séquence de repères temporels identifiables.

Du côté du client distant, le programme d'exploitation de chaque client distant 4, 4' met en œuvre un procédé d'exploitation qui comprend, dans une étape S5, S5' de réception, la réception des informations de session, y compris les repères temporels, fournies par l'ordinateur hôte 1 sous la forme du flux de session. Le programme d'exploitation reçoit ainsi notamment une séquence de repères temporels identifiables.

Cette étape S5, S5' de réception des informations peut survenir à un moment différent pour chaque client distant 4, 4', même si l'information a été émise simultanément depuis l'ordinateur hôte 1 vers l'ensemble de ces clients distants 4, 4'. Une telle variation s'explique principalement par la latence affectant de différemment les clients distants 4, 4', dont l'origine peut être la différence de distance géographique entre les clients distants 4, 4' et l'ordinateur hôte 1, ou la variation de qualité de réseau Internet, qui peut conduire à augmenter la durée de la transmission des flux de session.

Quelle que soit son origine, cet écart de temps dans la réception des informations a pour effet de décaler, dans une base de temps absolue, le moment auquel chaque client distant 4, 4' bénéficie de l'information de session. Nécessairement, ce décalage se conservera pour l'ensemble des opérations qui seront décrites dans la suite de la présente description.

Dans une étape S6, S6' de traitement des informations de session reçues, le programme d'exploitation qui s'exécute sur chaque client distant 4, 4' décode et traite le flux de session reçu. Par exemple, le programme d'exploitation peut traiter un flux vidéo pour l'afficher sur un écran du client distant 4, 4', ou pour émettre un son par un dispositif de sortie de son tel qu'un haut-parleur présent au niveau du client distant 4, 4'.

Suite à l'affichage ou à l'émission des informations de session, l'utilisateur du client distant 4, 4' peut être conduit à interagir au moyen des dispositifs d'entrée/sortie du client distant, par exemple par un déplacement ou un clic de souris, ou une entrée d'un caractère ou d'une chaîne de caractères. Quelle que soit la nature de l'interaction, le dispositif d'entrée/sortie du client distant 4, 4' produit une commande, à un instant de production de la commande.

Cette commande est capturée par le programme d'exploitation s'exécutant sur le client distant 4, 4', qui peut traiter les données de commande formant cette commande au cours d'une étape S7, S7' de traitement, par exemple en les mettant sous forme de séquences, incorporant par exemple les 10 ou 20 dernières données de commande capturées.

Quelle que soit la méthode de traitement employée par le programme d'exploitation, ce dernier met en œuvre une étape S8, S8' d'élaboration d'une donnée de coordination rattachant l'instant de production de la commande à l'un des repères temporels de la séquence de repères temporels.

Il s'agit au cours de cette étape de repérer temporellement la commande produite par le dispositif d'entrée/sortie du client distant 4, 4' dans la base de temps relative établie par les repères temporels. Cette base de temps relative permet de repérer l'instant de production de la commande de chaque client distant non par rapport à une date et une heure absolue, mais par rapport à un instant de référence avantageusement choisi.

Pour opérer ce repérage, la donnée de coordination peut comprendre un identifiant du repère temporel associé à la donnée de commande. Par exemple, il peut s'agir du numéro d'image associé au repère temporel.

Avantageusement, la donnée de coordination peut également comprendre une mesure du temps séparant l'instant de production de la commande à l'instant de référence, c'est-à-dire par exemple à la réception par le client distant 4, 4' du repère temporel rattaché. L'instant de référence et l'instant de production de la commande peuvent être déterminés par référence à une horloge locale du client distant 4, 4', le temps séparant les deux instants étant calculé par simple différence entre les deux dates fournies.

On peut choisir de rattacher l'instant de production de la commande à la réception ou au traitement par le client distant 4, 4' du repère temporel précédent le plus proche, ou du repère temporel le plus proche. Dans ce dernier cas, le client distant 4, 4' peut comprendre une mémoire pour stocker temporairement les données de commande, au moins jusqu'à la réception du repère temporel suivant, puis comparer le temps séparant l'instant de production de la commande de la réception du repère temporel précédent et suivant, et choisir le temps le plus court pour le rattachement. Bien entendu, il est possible de prévoir n'importe quel autre choix de rattachement.

Dans le cas où le repère temporel est associé à une image, il est intéressant de choisir l'instant de référence au moment où les paquets d'information constituant le flux de session sont reconstitués en image. Ce choix de point de départ permet de ne pas considérer le temps de traitement du flux de session, qui peut varier d'un client distant à l'autre au même titre que la latence. On choisit ainsi, pour tous les clients distants 4, 4', un point de départ lié non à l'envoi des informations de session par l'ordinateur hôte 1 mais à la visualisation de ces informations sur le client distant 4, 4'.

Effectué pour chaque client distant 4, 4', le rattachement permet notamment de connaître le temps de réaction de l'utilisateur de chaque client distant 4, 4' par rapport à la réception d'une même information de session, et non uniquement par rapport à celle de l'émission de l'information par l'ordinateur hôte 1. Cela permet donc de faire abstraction du temps de latence existant entre l'émission et la réception de l'information de session, pour ne considérer que le temps de réaction d'un utilisateur suivant, par exemple, l'affichage d'une image.

Quelle que soit la méthode employée pour élaborer la donnée de coordination, le procédé d'exploitation peut également comprendre une étape S9, S9' d'encodage de la commande associée à la donnée de coordination. Cette étape d'encodage peut comprendre classiquement leur encapsulation en paquets de données de commande, et la préparation d'un flux de données de commande par des moyens bien connus en soi.

Le programme d'exploitation fournit ensuite, au cours d'une étape S10, S10' de fourniture, la commande associée à la donnée de coordination à l'ordinateur hôte 1.

Revenant au procédé de capture et de diffusion, le programme de capture et de diffusion met en œuvre une étape S11 de réception, au cours de laquelle les commandes associées aux données de coordination provenant des premier et deuxième clients distants 4, 4' sont collectées. Le programme de capture et de diffusion peut également mettre en œuvre une étape S12 classique de décodage du flux de données de commande permettant l'exploitation de ces données.

Le procédé de capture et de diffusion comprend également, à la suite de la réception des données de commandes provenant des différents clients distants 4, 4', le stockage temporaire de ces données de commande. Cette étape consiste à préserver dans la mémoire de l'ordinateur hôte 1, pendant une certaine durée de stockage, les données de commande associées aux données de coordination provenant de l'ensemble des clients distants 4, 4' associés à une même session informatique. La durée de stockage peut typiquement s'étaler entre 1 ms et 1 seconde.

Ce stockage permet de conserver, pendant une durée limitée pour ne pas retarder le traitement des commandes reçues, l'ensemble des commandes.

Le procédé de capture et de diffusion comprend ensuite une étape S13 d'ordonnancement des commandes reçues pendant la durée de stockage en fonction des données de coordination auxquelles elles sont associées. Il suffit alors de classer les données de coordination par ordre chronologique par rapport aux instants de référence, ou par rapport aux numéros correspondants.

Le programme de capture et de diffusion fournit ensuite successivement, dans une étape S14 de fourniture, les commandes ordonnées à la session informatique, afin qu'elles soient traitées par cette dernière dans l'ordre dans lequel elles ont été produites par les différents clients distants suivant la réception de la séquence de repères temporels.

### Exemple

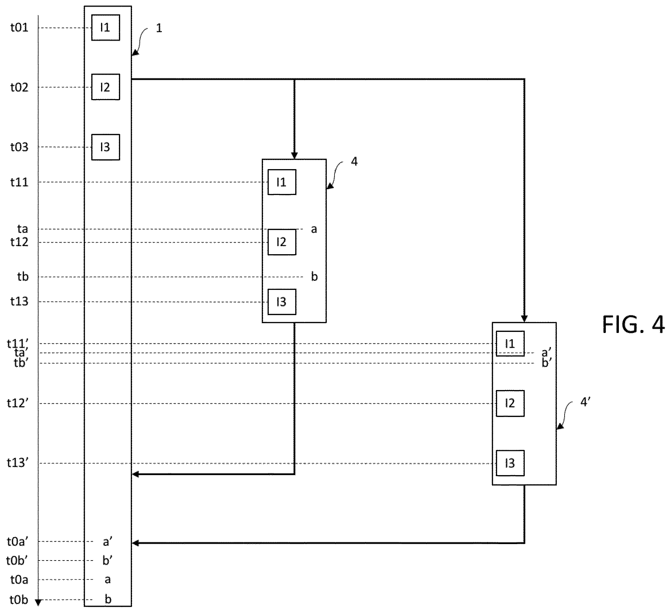

En comparaison avec le contre-exemple de la figure 3 développé dans l'introduction de la présente demande, on a représenté en figure 4 un chronogramme des échanges d'informations et de données entre un ordinateur hôte et des premier et deuxième clients distants 4, 4', qui mettent en œuvre un procédé de capture et de diffusion et un procédé d'exploitation conformes à la présente invention.

Sur cet exemple, les mêmes informations de session I1, I2, I3 sont produites par la session informatique, adressées par l'ordinateur hôte 1 et reçues par les premier et deuxième clients distants 4, 4', aux mêmes moments que précédemment.

De même, chaque client distant 4, 4' réagit à la réception de ces informations par deux instructions successives, a, b et a', b', aux mêmes moments que décrits en référence à la figure 3.

Toutefois, contrairement à la situation décrite en référence à la figure 3, les commandes ont ici été associés à des données de coordination suivant les procédés de coordination et de traitement conformes à la présente invention. Pour chacune de ces données, l'instant de référence, relatif aux informations de session envoyées par l'ordinateur hôte 1, est la réception de la première information de session I1. Les données de coordination associées aux informations de session comprennent ainsi un compteur décomptant le temps séparant l'instant de référence à l'instruction d'une commande par un client distant 4, 4'. On a ici choisi de prendre comme instant de référence la seule information de session I1, mais il aurait bien entendu tout aussi bien été possible de choisir comme instant de référence l'information de session dont la réception précède directement l'instruction.

Après réception et traitement des commandes associées aux données de coordination, l'ordinateur hôte ordonne les commandes reçues selon leur donnée de coordination associée. Autrement dit, le programme de capture et de diffusion classe les temps séparant l'instant de référence de l'instruction de chaque commande par ordre croissant.

Cet ordonnancement suivant les données de coordination conduit *in fine,* comme cela apparaît sur la figure 4, la session informatique à traiter les commandes dans l'ordre a', b', a, b.

Cet ordre basé sur une base de temps relative permet de refléter de manière plus cohérente le temps de réaction de chaque client distant 4, 4' à réception d'une information de session, indépendamment de la latence qui affecte ce client.

Bien entendu l'invention n'est pas limitée aux modes de mise en œuvre décrits et on peut y apporter des variantes de réalisation sans sortir du cadre de l'invention tel que défini par les revendications.

Ainsi, bien que l'on ait toujours présenté une architecture comprenant deux clients distants, le nombre de clients n'est aucunement limitant et l'on peut prévoir une architecture comprenant une pluralité de clients beaucoup plus importante, sans que le raisonnement ne soit aucunement modifié.

## Revendications

1. Procédé de capture et de diffusion pour coordonner des commandes produites par des dispositifs d'entrée-sortie d'un premier et d'un deuxième client distant (4, 4') associés à une même session informatique s'exécutant sur un ordinateur hôte (1), le procédé de capture et de diffusion mettant en œuvre depuis l'ordinateur hôte (1) les opérations suivantes :
- adresser (S4, S4') à chaque client distant (4, 4') une même séquence de repères temporels identifiables ;
- recevoir (S11) et stocker temporairement les commandes provenant des premier et deuxième clients distants (4, 4') pendant une durée de stockage, chaque commande étant associée à une donnée de coordination rattachant un instant de production de la commande à un repère temporel ;
- ordonner (S13) les commandes reçues pendant la durée de stockage selon leur donnée de coordination associée ;
- fournir successivement (S14) les commandes ordonnées à la session informatique.

2. Procédé de capture et de diffusion selon la revendication précédente dans lequel chaque repère temporel est associé à une information de session simultanément adressée par l'ordinateur hôte (1) aux clients distants (4, 4').

3. Procédé de capture et de diffusion selon la revendication précédente dans lequel les informations de session comprennent des informations d'affichage, de son et/ou de commande.

4. Procédé de capture et de diffusion selon la revendication précédente dans lequel les informations d'affichage sont des images de la session informatique, chaque repère temporel comprenant un numéro d'image.

5. Procédé de capture et de diffusion selon l'une des revendications précédentes dans lequel la durée de stockage est comprise entre 1 ms et 1 s.

6. Programme d'ordinateur contenant des instructions aptes à la mise en œuvre des opérations du procédé de capture et de diffusion selon l'une des revendications précédentes lorsque le procédé est exécuté dans l'ordinateur hôte (1).

7. Procédé d'exploitation pour traiter une commande produite par un dispositif d'entrée-sortie d'un client distant (4, 4') associé à une session informatique s'exécutant sur un ordinateur hôte (1), le procédé d'exploitation mettant en œuvre les opérations suivantes :
- recevoir (S5, S5') une séquence de repères temporels identifiables fournies par l'ordinateur hôte (1) ;
- élaborer (S8, S8') une donnée de coordination rattachant un instant de production de la commande à un des repères temporels ;
- fournir (S10, S10') la commande associée à la donnée de coordination à l'ordinateur hôte (1).

8. Procédé d'exploitation selon la revendication précédente dans lequel la donnée de coordination comprend un identifiant du repère temporel associé à la donnée de coordination.

9. Procédé d'exploitation selon l'une des revendications 7 et 8 dans lequel la donnée de coordination comprend une mesure du temps séparant l'instant de production de la commande à la réception du repère temporel rattaché.

10. Programme d'ordinateur contenant des instructions aptes à la mise en œuvre des opérations du procédé d'exploitation selon la revendication précédente lorsque le procédé est exécuté dans le client distant (4, 4').
